# EUROPEAN PATENT APPLICATION

(11) **EP 4 683 175 A1**
(43) Date of publication of application: **21.01.2026**
(21) Application number: 24770000.8
(22) Date of filing: 14.03.2024
(51) Int. Cl.: H02K 1/27

(54) **LOW EDDY CURRENT LOSS PERMANENT MAGNET ASSEMBLY FOR PERMANENT MAGNET MOTOR**

(30) Priority: 16.03.2023 US 202363490760 P
(71) Applicant: Yantai Dongxing Magnetic Materials Inc., Yantai, Shandong 265500 (CN)
(72) Inventor: PENG, Zhongjie, Yantai, Shandong 265500 (CN); LI, Xiaoqun, Yantai, Shandong 265500 (CN); LIANG, Feng, Yantai, Shandong 265500 (CN); DING, Kaihong, Yantai, Shandong 265500 (CN)
(74) Representative: Gulde & Partner
(86) International application number: PCT/CN2024/081682
(87) International publication number: WO 2024/188310

(57) **Abstract**

The present invention relates to the field of permanent magnet motors, and relates to a low eddy current loss permanent magnet assembly for a permanent magnet motor. The permanent magnet assembly is provided with an electric insulating layer; the electric insulating layer comprises a first group of insulating layers and a second group of insulating layers; the first group of insulating layers are defined as glue layers and used for bonding adjacent permanent magnet sections or bonding adjacent non-magnetically conductive sections to permanent magnet sections; the second group of insulating layers are defined as electric insulating layers; and the second group of insulating layers may be grooves filled with air or grooves made of other insulating materials other than glue. By arranging the glue layers and the electric insulating layers on the permanent magnet assembly, on the basis of reducing the eddy current of permanent magnets, the number of glue bonding sections can be decreased, and the problem of the mechanical strength reduction of the permanent magnets due to the second group of electric insulating layers being arranged is solved.

## Description

### Technical Field

The present invention relates to the technical field of permanent magnet design for rotors of permanent magnet motors.

### Background

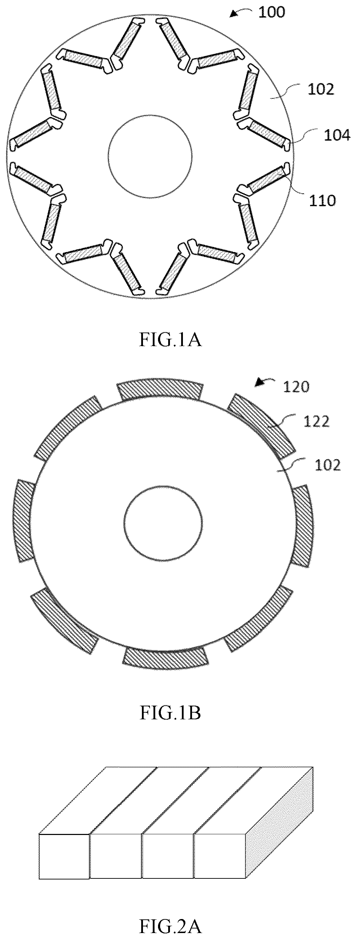

A permanent magnet motor comprises a stator and a rotor. FIG. 1A illustrates a schematic diagram of a rotor in an Interior Permanent Magnet (IPM) structure for a permanent magnet motor. The rotor 100 consists of multiple permanent magnets 110 placed in rotor slots 104 and a rotor core 102 made of laminated electrical steel. FIG. 1B illustrates a schematic diagram of a rotor in a Surface Permanent Magnet (SPM) structure for a permanent magnet motor. The rotor 120 is formed by permanent magnets 122 attached to the surface of the rotor core 102 via adhesive or other means. When the coils in the motor stator are energized, they generate a rotating magnetic field. This rotating magnetic field interacts with the magnetic field generated by the rotor's permanent magnets to produce torque, causing the rotor to rotate. When permanent magnets are subjected to external magnetic fields (including the field generated by the stator coils), eddy currents are induced in the permanent magnets, thereby increasing their temperature. The rise in permanent magnet temperature leads to magnetic flux loss in the permanent magnets, consequently reducing the motor's output torque and efficiency.

Currently, to reduce magnetic flux loss caused by temperature rise in permanent magnets due to induced eddy currents, the following main approaches are used:
1. Improving the temperature resistance characteristics of the permanent magnets, especially their magnetic properties at high temperatures. This method significantly impacts the cost of the permanent magnets.
2. Employing a segmented bonding approach for the permanent magnets to reduce eddy current losses, as shown in FIG. 2A. Chinese Invention Patent No. CN104454852B adopts this method.
3. Forming electrical insulation layers by removing partial material from the permanent magnets to reduce eddy current losses. Chinese Invention Patent No. CN1086314558B adopts this method, as shown in FIG. 2B. Similarly, U.S. Patent Application Publication No. US10666099B1 and U.S. Patent No. US6359359B1 also employ this method, providing different slotting configurations as shown in FIG. 2C and FIG. 2D, respectively.

Although the above three methods for reducing magnet eddy current losses can mitigate the decline in output torque and efficiency of permanent magnet motors caused by magnet temperature rise to some extent, they all have significant negative impacts on the cost, magnetic flux, or mechanical strength of the permanent magnets.

### Summary of the Invention

Technical Objective: In view of the aforementioned negative impacts of existing methods on the cost, magnetic flux, or mechanical strength of permanent magnets, the present invention proposes a low eddy current loss permanent magnet assembly for permanent magnet motors to overcome these disadvantages.

Technical Solution: The permanent magnet assembly of the present invention comprises insulation layers. The insulation layers can be defined as a first group of insulation layers and a second group of insulation layers. The first group of insulation layers are adhesive layers extending through the entire permanent magnet assembly along both its height direction and its length or width direction, thereby bonding adjacent permanent magnet segments together. The second group of insulation layers may be slots filled with air or other non-adhesive insulating materials, extending through the permanent magnet assembly only along its height direction.

The permanent magnet assembly of the present invention may further incorporate non-magnetic segments. Similarly, the permanent magnet assembly with non-magnetic segments comprises insulation layers defined as a first group and a second group. The first group of insulation layers are adhesive layers extending through the entire permanent magnet assembly along both its height direction and its length direction, thereby bonding adjacent permanent magnet segments together, or bonding permanent magnet segments to non-magnetic segments. The second group of insulation layers may be slots filled with air or other non-adhesive insulating materials, extending through the permanent magnet assembly only along its height direction.

Beneficial Effects: Through the above design, while reducing eddy currents generated in the permanent magnets within the motor, the number of adhesive bonding sections can be reduced, and the problem of reduced mechanical strength of the permanent magnets caused by introducing the second group of insulation layers can be mitigated.

### Brief Description of the Drawings

FIG. 1A is a schematic diagram of a rotor in an IPM structure for a permanent magnet motor;
FIG. 1B is a schematic diagram of a rotor in an SPM structure for a permanent magnet motor;
FIG. 2A is a schematic diagram of a representative prior art permanent magnet with bonded insulation layers;
FIG. 2B is a schematic diagram of another representative prior art permanent magnet with slotted insulation layers;
FIG. 2C is a schematic diagram of yet another representative prior art permanent magnet with slotted insulation layers;
FIG. 2D is a schematic diagram of still another representative prior art permanent magnet with slotted insulation layers;
FIG. 3 is a schematic diagram of a representative prior art permanent magnet;
FIG. 4A is a schematic diagram showing the distribution of eddy currents generated in a permanent magnet;
FIG. 4B is a schematic diagram showing the distribution of eddy currents generated at section B position of the permanent magnet shown in FIG. 4A;
FIG. 4C is a schematic diagram showing the distribution of eddy currents generated at section A position of the permanent magnet shown in FIG. 4A;
FIG. 5 is a schematic diagram of a permanent magnet assembly structure with insulation layers according to a first embodiment of the present invention;
FIG. 6 is a schematic diagram of a permanent magnet assembly structure with insulation layers according to a second embodiment of the present invention;
FIG. 7 is a schematic diagram of a permanent magnet assembly structure with insulation layers according to a third embodiment of the present invention;
FIG. 8 is a schematic diagram of a permanent magnet assembly structure with insulation layers according to a fourth embodiment of the present invention;
FIG. 9 is a schematic diagram of a permanent magnet assembly structure with insulation layers according to a fifth embodiment of the present invention;
FIG. 10 is a schematic diagram of Comparative Example 1 for verifying the effect of the embodiments of the present invention;
FIG. 11 is a schematic diagram of Comparative Example 2 for verifying the effect of the embodiments of the present invention;
FIG. 12 is a schematic diagram of Comparative Example 3 for verifying the effect of the embodiments of the present invention.

### Detailed Description of Embodiments

The principles and features of the present invention are described below in conjunction with FIGS. 1 to 9. The examples provided are only for explaining the invention and are not intended to limit its scope.

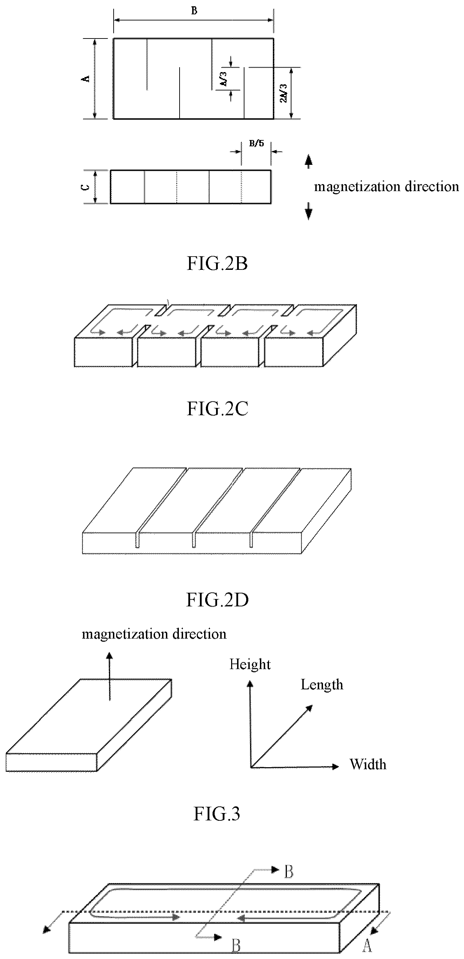

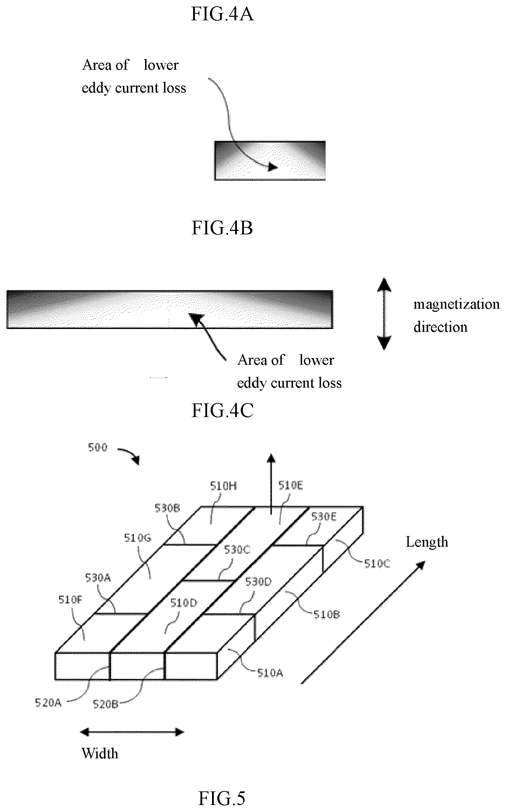

FIG. 3 shows a typical permanent magnet structure used in an IPM permanent magnet motor. The permanent magnet shown in FIG. 3 is a block, with its magnetization direction being the height direction of the magnet, and the rotor axial direction being the length direction of the magnet. FIG. 4A shows the eddy current path diagram of a typical rectangular permanent magnet simulated using electromagnetic simulation software, with the eddy current paths indicated by the arrow directions. As shown in FIGS. 4B and 4C, eddy current losses in the magnet are mainly concentrated in the edge regions of the permanent magnet. The eddy current loss is lower at the center of the magnet and higher at the edges. Although slotting in high eddy current loss regions can reduce the eddy current loss of the permanent magnet, it also leads to a reduction in the mechanical strength of the permanent magnet. Similarly, slotting in high eddy current loss regions of non-rectangular polyhedral permanent magnets (such as C-shaped cross-section magnets) also reduces their mechanical strength.

To further mitigate the problem of strength reduction in permanent magnets for permanent magnet motors caused by slotting, the present invention introduces adhesive layers and other types of electrical insulation layers simultaneously into the permanent magnet. The invention is applicable to permanent magnets of various shapes (such as rectangular, annular, tile-shaped, arc-shaped, etc.).

### Embodiment 1

FIG. 5 illustrates one embodiment of the present invention. Referring to FIG. 5, adhesive layers 520A and 520B extend through the entire permanent magnet assembly 500 along both its height and length directions, thereby bonding permanent magnet segments 510A, 510B, 510C, 510D, 510E, 510F, 510G, and 510H together to form the permanent magnet assembly 500. Electrical insulation layers 530A, 530B, 530C, 530D, and 530E are perpendicular to the adhesive layers 520A and 520B, and extend through the entire permanent magnet assembly only along its height direction. At least one of the electrical insulation layers 530A, 530B, 530C, 530D, and 530E is a slot filled with air or other insulating material (width ≤0.3mm). The adhesive layers 520A and 520B do not intersect with any of the electrical insulation layers.

### Embodiment 2

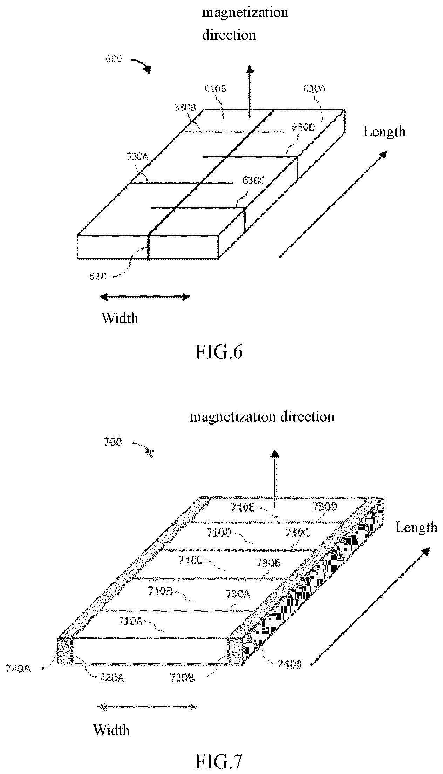

FIG. 6 illustrates another embodiment of the present invention. Referring to FIG. 6, an adhesive layer 620 extends through the entire permanent magnet assembly 600 along both its height and length directions, thereby bonding permanent magnet segments 610A and 610B together to form the permanent magnet assembly 600. Electrical insulation layers 630A, 630B, 630C, and 630D are perpendicular to the adhesive layer 620 and extend through the entire permanent magnet assembly only along its height direction. At least one of the electrical insulation layers 630A, 630B, 630C, and 630D is a slot filled with air or other insulating material (width ≤0.3mm). The electrical insulation layers 630A, 630B, 630C, and 630D intersect with the adhesive layer 620.

### Embodiment 3

FIG. 7 illustrates yet another embodiment of the present invention. Referring to FIG. 7, adhesive layers 720A and 720B extend through the entire permanent magnet assembly 700 along both its height and length directions, thereby bonding permanent magnet segments 710A, 710B, 710C, 710D, 710E and non-magnetic segments 740A and 740B together to form the permanent magnet assembly 700. Electrical insulation layers 730A, 730B, 730C, and 730D are perpendicular to the adhesive layers 720A and 720B and extend through the entire permanent magnet assembly only along its height direction. At least one of the electrical insulation layers 730A, 730B, 730C, and 730D is a slot filled with air or other insulating material (width ≤0.3mm). The adhesive layers 720A and 720B do not intersect with any electrical insulation layers.

### Embodiment 4

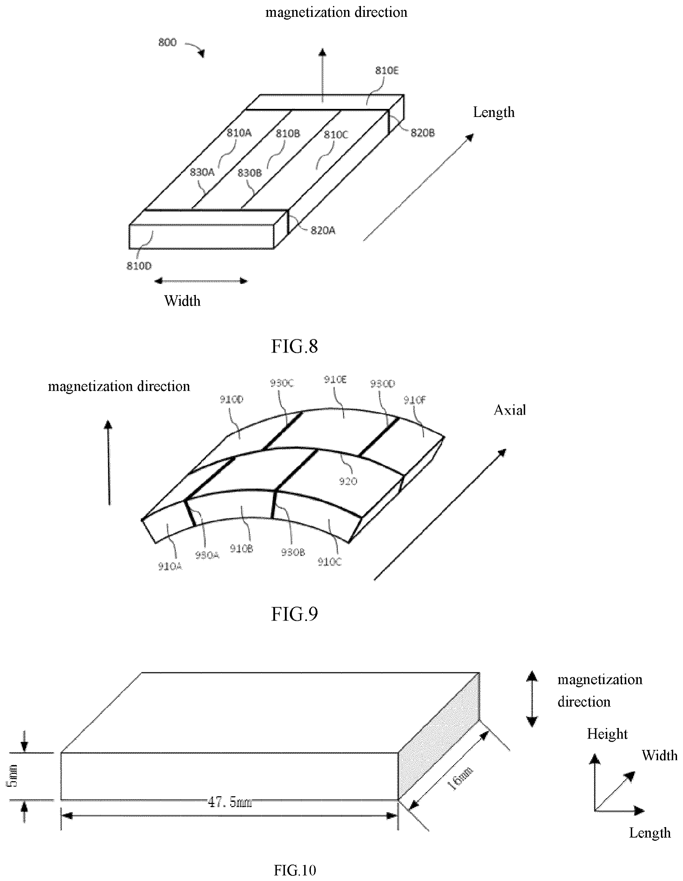

FIG. 8 illustrates still another embodiment of the present invention. Referring to FIG. 8, adhesive layers 820A and 820B extend through the entire permanent magnet assembly 800 along both its height and width directions, thereby bonding permanent magnet segments 810A, 810B, 810C, 810D, and 810E together to form the permanent magnet assembly 800. Electrical insulation layers 830A and 830B are perpendicular to the adhesive layers 820A and 820B and extend through the entire permanent magnet assembly only along its height direction. At least one of the electrical insulation layers 830A and 830B is a slot filled with air or other insulating material (width ≤0.3mm). The adhesive layers 820A and 820B do not intersect with any electrical insulation layers.

### Embodiment 5

FIG. 9 illustrates a further embodiment of the present invention. In this embodiment, the shape of the permanent magnet is C-shaped, and the circumferential direction of the permanent magnet assembly is approximately equivalent to the width direction. Referring to FIG. 9, an adhesive layer 920 extends through the entire permanent magnet assembly 900 along both its height and circumferential directions, thereby bonding permanent magnet segments 910A, 910B, 910C, 910D, 910E, and 910F together to form the permanent magnet assembly 900. Electrical insulation layers 930A, 930B, 930C, and 930D are perpendicular to the adhesive layer 920 and extend through the entire permanent magnet assembly only along its height direction. At least one of the electrical insulation layers 930A, 930B, 930C, and 930D is a slot filled with air or other insulating material (width ≤0.3mm). The adhesive layer 920 does not intersect with any electrical insulation layers.

The technical effects of different permanent magnet structures are compared below by testing the temperature change value of permanent magnets after heating in an induction coil.

Sample: Rectangular parallelepiped NdFeB permanent magnet; Dimensions (L*W*H): 47.5mm * 16mm * 5mm; Magnetization direction: Height direction.

Embodiment 2 of the present invention was used for comparative testing. In the width direction, two identical permanent magnet segments were bonded together using insulating adhesive. Two slots were cut along the length direction of the permanent magnet and distributed in a mirrored and staggered manner along the width direction. The slots were filled with air, had a width of 0.15mm, and a length equal to 2/3 of the magnet width.

A solid permanent magnet without bonding or slots is recorded as Comparative Example 1, as shown in FIG. 10.

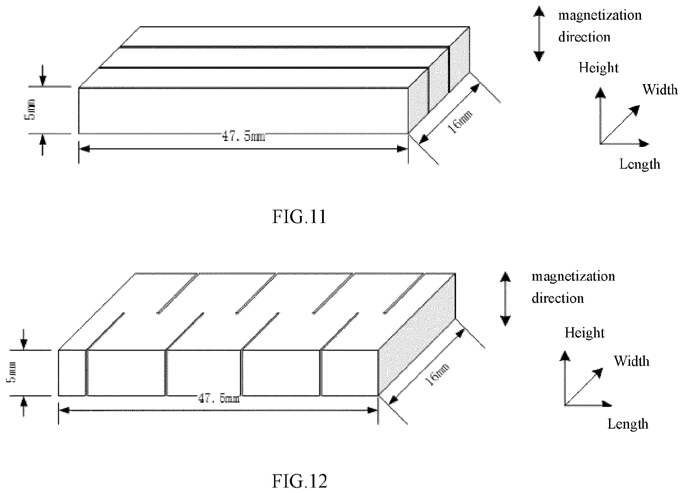

A permanent magnet uniformly divided into three segments in the width direction and bonded together with insulating adhesive is recorded as Comparative Example 2, as shown in FIG. 11.

Four slots were cut along the length direction of the permanent magnet, extending through the entire height direction. The slot length was 1/2 of the magnet width, and the slot width was 0.15mm. This configuration is defined as one group of insulation slots. This group of insulation slots was further distributed in a mirrored and staggered manner along the width direction. This is recorded as Comparative Example 3, as shown in FIG. 12.

Heating was performed using an induction coil. The above samples were placed at the same position within the coil. Under the same frequency and current settings, the temperature change value of each permanent magnet was measured after heating for 2 minutes. Additionally, the three-point bending strength of different solutions was tested. The comparative test results are shown in Table 1.

**Table 1: Comparison of Temperature Rise, Mechanical Strength, and Relative Cost for Different Samples After Heating**

| Name | Temperature Rise (°C) | Mechanical Strength (MPa) | Relative Cost |
|---|---|---|---|
| Embodiment 2 | 64.1 | 123.4 | 105% |
| Comp. Ex. 1 | 115 | 152.1 | 100% |
| Comp. Ex. 2 | 64.6 | 149.6 | 108% |
| Comp. Ex. 3 | 70.2 | 45.9 | 102% |

The above experiment reflects the trend of temperature rise for different permanent magnet samples. Although the temperature rise reduction in Comparative Example 3 is also significant, its mechanical strength decreases substantially. In contrast, the embodiments of the present invention can effectively solve the problem of low mechanical strength in the prior art, while achieving a temperature rise comparable to the bonding technology of Comparative Example 2, with a cost advantage.

## Claims

1. A permanent magnet assembly, **characterized in that** it comprises:
a plurality of permanent magnet segments;
at least one adhesive layer;
at least one glue-free electrical insulation layer embedded within the permanent magnet assembly.

2. The permanent magnet assembly according to claim 1, **characterized in that** said adhesive layer extends through the entire permanent magnet assembly along both the height direction and the length direction, or along both the height direction and the width direction of the permanent magnet assembly.

3. The permanent magnet assembly according to claim 2, **characterized in that** said adhesive layer bonds said permanent magnet segments together to form the permanent magnet assembly.

4. The permanent magnet assembly according to claim 2, **characterized in that** said adhesive layer is parallel to the length direction or the width direction of the permanent magnet assembly.

5. The permanent magnet assembly according to claim 1, **characterized in that** said electrical insulation layer extends through the entire permanent magnet assembly only along the height direction of the permanent magnet assembly.

6. The permanent magnet assembly according to claim 1, **characterized in that** said electrical insulation layer is perpendicular to said adhesive layer.

7. The permanent magnet assembly according to claim 1, **characterized in that** said electrical insulation layer may be a groove filled with air or other insulating material.

8. The permanent magnet assembly according to claim 1, **characterized in that** said adhesive layer does not intersect with any electrical insulation layer.

9. The permanent magnet assembly according to claim 1, **characterized in that** at least one said adhesive layer intersects with an electrical insulation layer.

10. A permanent magnet assembly, **characterized in that** it comprises:
a plurality of permanent magnet segments;
a plurality of adhesive layers;
a plurality of non-magnetic segments;
at least one glue-free electrical insulation layer embedded within the permanent magnet assembly.

11. The permanent magnet assembly according to claim 10, **characterized in that** said plurality of adhesive layers extend through the entire permanent magnet assembly along both the height direction and the length direction of the permanent magnet assembly.

12. The permanent magnet assembly according to claim 11, **characterized in that** said adhesive layers are parallel to the length direction of said permanent magnet assembly.

13. The permanent magnet assembly according to claim 11, **characterized in that** said adhesive layers bond said permanent magnet segments and said non-magnetic segments together at both ends along the width direction of the permanent magnet assembly, thereby forming said permanent magnet assembly.

14. The permanent magnet assembly according to claim 10, **characterized in that** said electrical insulation layer extends through the entire permanent magnet assembly only along the height direction of the permanent magnet assembly.

15. The permanent magnet assembly according to claim 10, **characterized in that** said electrical insulation layer is perpendicular to said adhesive layer.

16. The permanent magnet assembly according to claim 10, **characterized in that** said electrical insulation layer may be a groove filled with air or other insulating material.

17. The permanent magnet assembly according to claim 10, **characterized in that** said adhesive layer does not intersect with any electrical insulation layer.
